# EUROPÄISCHE PATENTSCHRIFT

(11) **EP 1 772 253 B1**
(45) Veröffentlichungstag und Bekanntmachung des Hinweises auf die Patenterteilung: **10.08.2011**
(21) Anmeldenummer: 06019876.9
(22) Anmeldetag: 22.09.2006
(51) Int. Cl.: B29C 65/08, B23K 20/10

(54) **Vorrichtung und Verfahren zum Vibrationsschweissen**
Apparatus and process for vibration welding
Dispositif et procédé de soudage par vibration

(30) Priorität: 05.10.2005 DE 102005047706
(43) Veröffentlichungstag der Anmeldung: 11.04.2007
(73) Patentinhaber: BRANSON ULTRASCHALL Niederlassung der EMERSON TECHNOLOGIES GmbH & CO., D-63128 Dietzenbach (DE)
(72) Erfinder: Neuroth, Christian, 45239 Essen (DE); Priem, Heiko, 63636 Brachtal (DE)
(74) Vertreter: Heyer, Volker

(56) Entgegenhaltungen:
- EP-A- 1 216 760
- US-A1- 2005 061 848

## Beschreibung

### 1. Gebiet der Erfindung

Die vorliegende Erfindung betrifft eine Vorrichtung und ein Verfahren zum Vibrationsschweißen, insbesondere das Vibrationsschweißen mit einer Mehrzahl von Schwingköpfen.

EP-A-1 216 760 zeigt ein Ultraschallschweissverfahren mit mehreren Schwingköpfe.

### 2. Hintergrund der Erfindung

Zum Verschweißen von Kunststoffteilen hat sich das Vibrationsschweißen etabliert. Bei diesem Verfahren werden die zu verschweißenden Kunststoffteile an bestimmten Grenzflächen gegeneinander gerieben. Durch diese Reibung wird die Schmelztemperatur des Kunststoffs der zu verbindenden Teile in der Fügezone erreicht, sodass der Kunststoff an den Grenzflächen plastifiziert wird und sich verbindet.

Zum Vibrationsschweißen werden i. A. einzelne Schwingköpfe in Vibrationsschweißmaschinen betrieben. Diese Technik eignet sich zum Verschweißen von Kunststoffteilen unterschiedlicher Größe, wie beispielsweise Armaturentafeln von Kraftfahrzeugen. In Abhängigkeit von der Größe der Kunsstoffteile kommen somit Maschinen unterschiedlicher Größe zum Einsatz. Diese werden nach Werkzeuggewichten, zu verschweißenden Flächen und Baugröße unterschieden.

Um größere Kunststoffteile verbinden zu können, ist es wirtschaftlich und technisch sinnvoller, die Anzahl der Schwingköpfe in den Vibrationsschweißmaschinen zu erhöhen, als die einzelnen Schwingköpfe immer größer zu bauen. Daher werden durch Hintereinanderschalten der elektrischen Komponenten, wie beispielsweise elektrische Spulen, und das mechanische Koppeln der mechanischen Komponenten größere Anlagen realisierbar. Das mechanische Koppeln hat gerade bei den größeren Anlagen zentrale Bedeutung, da nur auf diese Weise eine in Frequenz und Phase gleiche Schwingung der verbundenen mechanischen Komponenten und Schwingköpfe erzielt werden kann. Ein wesentlicher Nachteil ist jedoch, dass aus konstruktiven Gründen bisher nur jeweils zwei Schwingköpfe miteinander koppelbar und dadurch synchronisierbar sind. Ist jedoch eine Vielzahl von Schwingköpfen zum Vibrationsschweißen großer Kunststoffteile erforderlich, ergeben sich Abstimmungsschwierigkeiten der Schwingköpfe untereinander. Beispielsweise wird durch ein unkontrolliertes, nicht phasengleiches Schwingen der Schwingköpfe innerhalb der Vibrationsschweißmaschine eine nicht verlässliche Verbindung der Kunststoffteile erzeugt.

Es ist daher die Aufgabe der vorliegenden Erfindung, eine Vorrichtung und ein Verfahren zum Vibrationsschweißen bereitzustellen mit der/dem auch bei der Verwendung einer Vielzahl von Schwingköpfen bzw. Schwingsystemen eine verlässliche Verbindung der Kunststoffteile gewährleistet werden kann, weil die Schwingsysteme oder Schwingköpfe in der Summe genauso wirken wie ein großer Schwingkopf.

### 3. Zusammenfassung der Erfindung

Die obige Aufgabe wird durch eine Vorrichtung gemäß dem unabhängigen Patentanspruch 1 und durch ein Verfahren gemäß dem unabhängigen Patentanspruch 6 gelöst. Vorteilhafte Ausgestaltungen, Ausführungsformen und Weiterentwicklungen der vorliegenden Erfindung gehen aus der folgenden Beschreibung, den Zeichnungen und den anhängenden Ansprüchen hervor. Die vorliegende Erfindung stellt eine Vorrichtung und ein Verfahren bereit, mit der/dem mehrere voneinander unabhängige und mechanisch nicht gekoppelte Schwingsysteme amplituden-, frequenz- und phasengleich arbeiten, sodass ihre Wirkung der eines einzelnen großen Schwingkopfs entspricht.

Die erfindungsgemäße Vorrichtung zum Vibrationsschweißen umfasst eine Mehrzahl von mechanisch entkoppelten Schwingköpfen, die mit jeweils einem Frequenzumrichter oder einer anderen geeigneten Ansteuerung verbunden sind, eine elektrische Schaltung, die die Frequenzumrichter der Schwingköpfe derart miteinander verbindet, dass einer der Frequenzumrichter als Master und die anderen Frequenzumrichter als Slave betreibbar sind, sodass basierend auf einer steuernden Wirkung des Masters ein synchroner oder ein gezielt asynchroner Betrieb der Mehrzahl von Schwingköpfen realisierbar ist.

Mit Hilfe der erfmdungsgemäßen Vorrichtung werden sowohl die Abstimmungs- als auch die konstruktiven Schwierigkeiten zum synchronen Betreiben einer Mehrzahl von Schwingköpfen überwunden. Dies beruht darauf, dass mit Hilfe einer elektrischen Ansteuerung der Mehrzahl von Schwingköpfen auf deren mechanische Kopplung zur Synchronisation verzichtet werden kann. Des Weiteren wird durch die elektrische Zusammenschaltung der mechanisch entkoppelten Schwingköpfe eine elektrische Versorgung dieser Schwingköpfe mit dem gleichen Steuersignal realisiert. Das gleiche elektrische Steuersignal für jeden der Schwingköpfe stellt sicher, dass ein synchroner Betrieb der Schwingköpfe in Frequenz, Phase und Amplitude oder in einer Auswahl dieser Größen möglich ist. Gemäß einer weiteren Ausführungsform ist es ebenfalls denkbar, dass die konstruktiven und/oder Materialbesonderheiten von zu verbindenden Kunststoffteilen einen gezielt asynchronen Betrieb der Schwingköpfe bezogen auf Phase und/oder Amplitude erforderlich machen. Es ist weiterhin von Vorteil, dass die Schwingköpfe gemeinsam gestartet und gestoppt werden. Gemäß einer weiteren Ausgestaltung sind die Schwingköpfe nach gemeinsamem Start auch zu beliebigen Zeitpunkten einzeln und/oder in Gruppen stoppbar.

Gemäß einer weiteren Ausführungsform ist es bevorzugt, dass für die Mehrzahl von Schwingköpfen durch den Master die gleiche Frequenz und Phasenlage vorgegeben wird, während sich die Frequenz aus dem Mittelwert der Resonanzfrequenzen der einzelnen Schwingköpfe ergibt. Als weitere Ausgestaltung ist es weiterhin denkbar, die Slaves durch den Master über ein BUS-System oder eine Parallelschaltung anzusteuern, mit der jeweils eine individuelle Amplitudensteuerung der einzelnen Schwingköpfe möglich ist. Basierend auf der individuellen Ansteuerung der Schwingköpfe und deren fehlender mechanischer Kopplung sind diese Schwingköpfe, beispielsweise mindestens zwei Schwingköpfe, bezüglich eines zu schweißenden Werkstücks frei positionierbar. Aufgrund dieser konstruktiven Freiheit kann auf die unterschiedlichsten Werkstückgeometrien eingegangen werden, während gleichzeitig eine verlässliche Schweißverbindung garantiert ist.

Das erfindungsgemäße Verfahren zum Vibrationsschweißen mit einer Mehrzahl von jeweils mit einem Frequenzumrichter oder einer anderen geeigneten Ansteuerung verbundenen und mechanisch voneinander entkoppelten Schwingköpfen umfasst die folgenden Schritte: Definieren mindestens eines der Frequenzumrichter als Master und der verbleibenden Frequenzumrichter als Slave, Ansteuern der Slaves durch den mindestens einen Master derart, dass die Schwingköpfe in Frequenz, Phase und Amplitude oder in einer Auswahl dieser Größen synchron oder gezielt asynchron betrieben werden.

### 4. Kurze Beschreibung der begleitenden Zeichnung

Die vorliegende Erfindung wird unter Bezugnahme auf die begleitende Zeichnung näher erläutert. Es zeigen:
- Fig. 1: eine Mehrzahl von Schwingköpfen, die voneinander mechanisch entkoppelt in einem Vibrationsschweißgerät betrieben werden und
- Fig. 2: die Amplitudensignale mehrerer Schwingköpfe im Vergleich.

### 5. Detaillierte Beschreibung der bevorzugten Ausführungsformen

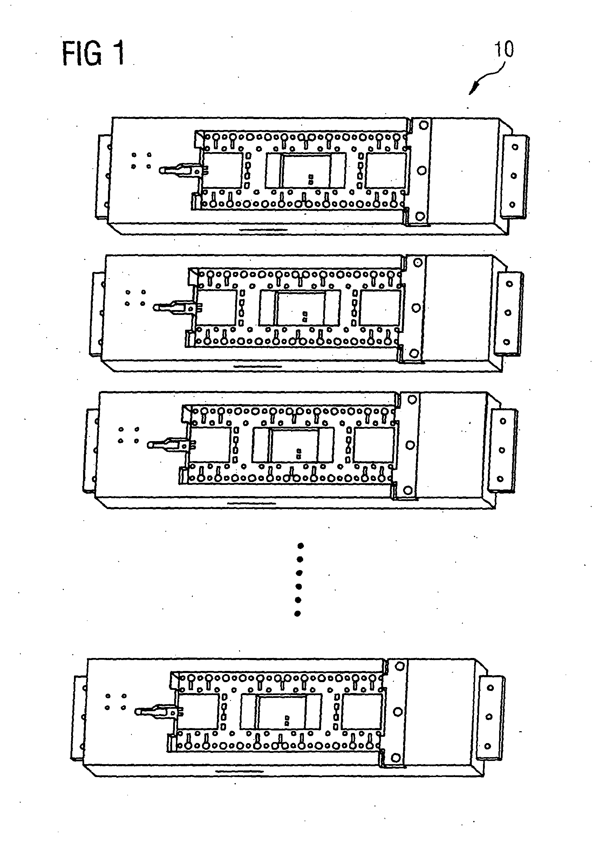

Die Vorrichtung zum Vibrationsschweißen umfasst eine Mehrzahl von Schwingköpfen 10, vorzugsweise zwei oder mehr. Diese Schwingköpfe 10 sind beispielgebend in Fig. 1 dargestellt. Sie sind mechanisch entkoppelt innerhalb der Vorrichtung zum Vibrationsschweißen angeordnet. Aufgrund dieser mechanisch entkoppelten Anordnung der Schwingköpfe 10 muss die Geometrie der zu verschweißenden Kunststoffteile nicht auf die Anordnung der Schwingköpfe 10 angepasst bzw. auf sie abgestimmt sein. Vielmehr sind die Schwingköpfe 10 frei positionierbar, sodass eine auf beliebige Geometrien der zu verarbeitenden Kunststoffteile angepasste Anordnung der Schwingköpfe 10 möglich ist.

Die Schwingköpfe 10 sind jeweils mit einem Frequenzumrichter oder einer anderen geeigneten Ansteuerung (nicht gezeigt) verbunden. Die Frequenzumrichter wiederum sind über eine elektrische Schaltung derart miteinander verbunden, dass einer der Frequenzumrichter als Master-Frequenzumrichter (im Folgenden Master) und die anderen Frequenzumrichter als Slave-Frequenzumrichter (im Folgenden Slave) betreibbar sind. Diese elektrische Beschaltung setzt voraus, dass zunächst einer der Frequenzumrichter als Master und die verbleibenden Frequenzumrichter als Slave definiert werden. Der Master gibt die Steuer- und/oder Versorgungssignale aller Frequenzumrichter der Schwingköpfe 10 vor, d. h. sowohl für sich selbst als auch für die Slaves. Auf dieser Grundlage kann ein beliebiger der in der Vibrationsschweißmaschine verbauten Frequenzumrichter mit Schwingkopf 10 als Master definiert werden, sodass ein separater Frequenzumrichter oder eine separate Steuereinheit für die Schwingungssysteme der Vibrationsschweißmaschine eingespart wird. Es ist jedoch als weitere Ausführungsform denkbar, einen von einem Schwingkopf 10 getrennten Frequenzumrichter oder eine separate Steuereinheit als Master zu nutzen. Es ist weiterhin bevorzugt, dass nicht alle Steuersignale durch den Master vorgegeben werden. So werden beispielsweise gemäß einer weiteren Ausführungsform die Sollamplituden nicht durch den Master, sondern durch die einzelnen Slaves vorgegeben.

Die elektrische Schaltung, über die die Frequenzumrichter bzw. die Master und Slaves verbunden sind, kann gemäß unterschiedlicher Ausführungsformen unterschiedlich ausgebildet sein. Gemäß einer ersten Ausfiihrungsform sind der Master und die Slaves über eine Parallelschaltung miteinander verbunden. Auf dieser Grundlage steuert der Master alle Slaves und somit auch die damit verbundenen Schwingköpfe mit dem gleichen Signal an. Dadurch werden alle Schwingköpfe 10 mit synchroner Frequenz und Phase betrieben. In Ergänzung dazu sind die Slaves jeweils individuell mit dem Master verbunden, um einen individuellen Sollwert für die Amplitude der Schwingung des einzelnen Schwingkopfs 10 zu empfangen. Auf diese Weise wird eine gezielt durch den Master gesteuerte und von den Slaves geregelte Amplitude in den einzelnen Schwingköpfen 10 erzeugt. Generell ist es natürlich möglich, die Amplitude vom Master vorgeben zu lassen. Die Regelung der einzelnen Amplituden übemehmen aber bevorzugt die einzelnen Slaves.

Gemäß einer weiteren Ausführungsform der vorliegenden Erfindung sind die Slaves mit dem Master über ein BUS- (Binary Unit System) System verbunden. Dieses BUS-System stellt den Austausch von Betriebsdaten zwischen den Frequenzumrichtern sicher, sodass die angeschlossenen Schwingköpfe 10 vollständig über Master und BUS-System angesteuert werden. Die vom Master übermittelten Betriebsdaten umfassen Steuer- und/oder Versorgungsdaten für die verbundenen Slaves, die Frequenz, Amplitude und Phasenlage der Schwingköpfe 10 festlegen.

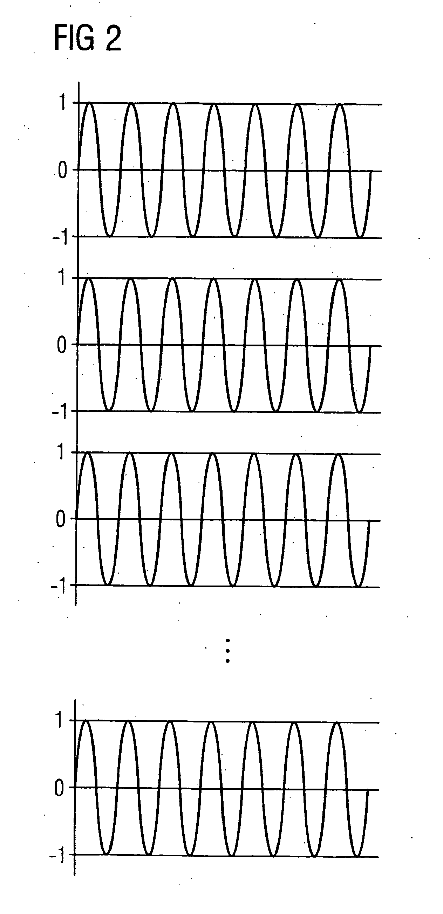

Mit Hilfe der obigen elektrischen Schaltungen zur Verbindung der Frequenzumrichter und Schwingköpfe 10 werden die Schwingköpfe 10 in Frequenz, Phase und Amplitude oder in einer Auswahl dieser Größen synchron (vgl. Fig. 2) oder gezielt asynchron betrieben. Synchron bedeutet in diesem Zusammenhang, dass die Schwingköpfe mit der gleichen Amplitude, Frequenz und Phasenlage oder mit einer Auswahl dieser übereinstimmenden Größen arbeiten. Asynchron bedeutet, dass Amplitude und Phasenlage der verschiedenen Schwingköpfe unterschiedlich zueinander sind. Die Größe der Unterschiede wird durch die Anforderungen des Vibrationsschweißvorgangs bestimmt. So ist es beispielsweise denkbar, dass sich in einem großflächigen Werkstück durch synchrones Arbeiten der Schwingköpfe störende Schwingungen/Vibrationen ausbilden können. Diese würden durch ein gezielt asynchrones Ansteuern und Arbeiten einzelner oder mehrerer Schwingköpfe ausgeglichen oder reduziert werden. Somit können Werkstückgeometrie, -größe, Eigenschaften des zu verarbeitenden Materials sowie weitere Randbedingungen des Vibrationsschweißens diese Betriebsweise erforderlich machen. Für eine synchrone Frequenzsteuerung wird die jeweilige Resonanzfrequenz der Schwingköpfe 10 über den zugeordneten Frequenzumrichter bzw. Slave ermittelt und an den Master weitergeleitet. Aus den ermittelten Resonanzfrequenzen berechnet der Master den Mittelwert, sodass basierend auf diesem Mittelwert ein Frequenzsollwert vom Master an die Slaves weitergegeben oder diesen vorgegeben wird. Die Amplitude der Schwingköpfe 10 wird individuell über einen gezielt durch den Master einstellbaren Sollwert gesteuert, der entweder über eine eigene Leitung oder über das BUS-System an den jeweiligen Slave und den angeschlossenen Schwingkopf 10 übermittelt wird. Daher kann die Amplitude der einzelnen Schwingköpfe entsprechend dem jeweiligen Sollwert übereinstimmen oder gezielt unterschiedlich sein.

Mit Hilfe der mechanisch entkoppelten Anordnung der Schwingköpfe 10 und ihrer gleichzeitigen beispielsweise synchronen Ansteuerung sind die Schwingköpfe 10 frei im Raum positionierbar. Auf dieser Grundlage wird die räumliche Anordnung der Schwingköpfe 10 mit den zugeordneten Frequenzumrichtern bzw. Slaves optimal auf die Geometrie der zu bearbeitenden Werkstücke angepasst. Somit ist einerseits eine synchrone oder gezielt asynchrone Ansteuerung der Schwingköpfe sichergestellt, während andererseits die Zwänge durch eine mechanische Kopplung der Schwingköpfe vermieden werden. Bevorzugt werden zwei oder mehr Schwingköpfe 10 eingesetzt, während diese Anzahl jedoch mit der Werkstückgeometrie und -größe variiert. Zudem ist weiterhin bevorzugt, die Schwingköpfe gemeinsam zu starten und zu stoppen oder nach einem gemeinsamen Start ein zeitlich versetztes Stoppen der Schwingköpfe durchzuführen.

Es ist weiterhin bevorzugt, dass die Frequenz, die Phase und die Amplitude oder nur eine Auswahl dieser Größen synchron durch den Master gesteuert werden. Diese Unterschiede in der Steuerung werden beispielsweise durch die Werkstückgeometrie, -größe oder die Eigenschaften des zu verarbeitenden Materials vorgegeben. Daraus folgt, dass der durch den Master zu realisierende Steuerungsaufwand auf den jeweiligen Arbeitsprozess anpassbar ist, sodass beispielsweise übermäßige Belastungen des Masters verhindert werden.

## Patentansprüche

1. Vibrationsschweißvorrichtung, die die folgenden Merkmale aufweist:
a. eine Mehrzahl von mechanisch entkoppelten Schwingköpfen (10), die mit jeweils einem Frequenzumrichter oder einer anderen geeigneten Ansteuerung verbunden sind,
b. eine elektrische Schaltung, die die Frequenzumrichter der Schwingköpfe (10) derart miteinander verbindet, dass einer der Frequenzumrichter als Master und die anderen Frequenzumrichter als Slave betreibbar sind, so dass
c. basierend auf einer steuernden Wirkung des Masters ein synchroner oder ein gezielt asynchroner Betrieb der Mehrzahl von Schwingköpfen (10) realisierbar ist.

2. Vibrationsschweißvorrichtung gemäß Anspruch 1, in der die Schwingköpfe (10) in Frequenz, Phase und Amplitude oder in einer Auswahl dieser Größen synchron oder gezielt asynchron betreibbar sind.

3. Vibrationsschweißvorrichtung gemäß Anspruch 1 oder 2, in der Frequenz und Phasenlage der Schwingköpfe (10) durch den Master vorgebbar sind, während die Frequenz durch den Mittelwert der Resonanzfrequenzen der Schwingköpfe (10) festgelegt ist.

4. Vibrationsschweißvorrichtung gemäß einem der vorhergehenden Ansprüche, in der die Slaves durch den Master über ein Bus-System oder eine Parallelschaltung mit individueller Amplitudensteuerung ansteuerbar sind.

5. Vibrationsschweißvorrichtung gemäß einem der vorhergehenden Ansprüche, die mindestens zwei Schwingköpfe (10) mit Frequenzumrichter aufweist, die bezüglich eines Werkstücks frei positionierbar sind.

6. Vibrationsschweißverfahren für ein Werkstück mit einer Mehrzahl von jeweils mit einem Frequenzumrichter verbundenen und mechanisch voneinander entkoppelten Schwingköpfen (10), das die folgenden Schritte aufweist:
a. Definieren mindestens eines der Frequenzumrichter als Master und der verbleibenden Frequenzumrichter als Slave,
b. Ansteuern der Slaves durch den mindestens einen Master derart, dass
c. die Schwingköpfe in Frequenz, Phase und Amplitude oder in einer Auswahl dieser Größen synchron oder gezielt asynchron betrieben werden.

7. Vibrationsschweißverfahren gemäß Anspruch 6, in dem das Ansteuern über eine Parallelschaltung der Frequenzumrichter oder durch eine Verbindung der Frequenzumrichter über ein BUS-System erfolgt.

8. Vibrationsschweißverfahren gemäß Anspruch 6 oder 7, in dem mindestens zwei Schwingköpfe betrieben werden, die in Bezug auf ein Werkstück frei positionierbar sind.

9. Vibrationsschweißverfahren gemäß einem der Ansprüche 6 bis 8, das den weiteren Schritt aufweist:
Vorgeben von Frequenz und Phasenlage der Schwingköpfe durch den Master, während die Frequenz durch den Mittelwert der Resonanzfrequenzen der Schwingköpfe (10) festgelegt ist.

10. Vibrationsschweißverfahren gemäß einem der Ansprüche 6 bis 9, das den weiteren Schritt aufweist:
Vorgeben eines individuellen oder eines gemeinsamen Amplituden-Sollwerts für die Schwingköpfe (10) durch den Master und Übermitteln dieses Sollwerts an die Slaves, so dass die Schwingköpfe (10) mit übereinstimmender Amplitude oder mit unterschiedlicher Amplitude betreibbar sind.

## Claims

1. Vibration welding apparatus, which has the following characteristics:
a. a plurality of mechanically decoupled oscillating heads (10), each of which are connected with a frequency converter or another suitable drive,
b. an electrical circuit, which connects the frequency converters of the oscillating heads (10) together such that one of the frequency converters can be operated as the master and the other frequency converter as the slave, so that,
c. based on the controlling effect of the master, a synchronous or a targeted asynchronous operation of the plurality of oscillating heads (10) can be realized.

2. Vibration welding apparatus in accordance with claim 1, in which the oscillating heads (10) can be operated synchronously or in a targeted asynchronous manner in frequency, phase and amplitude or in a selection of these variables.

3. Vibration welding apparatus in accordance with claim 1 or 2, in which the frequency and phasing of the oscillating heads (10) can be specified by the master, while the frequency is determined by the mean value of the resonance frequency of the oscillating heads (10).

4. Vibration welding apparatus in accordance with one of the preceding claims, in which the slaves can be controlled by the master via a bus system or a parallel circuit with individual amplitude control.

5. Vibration welding apparatus in accordance with one of the preceding claims, which comprises at least two oscillating heads (10) having a frequency converter, wherein said oscillating heads (10) can be freely positioned with respect to a work piece.

6. Vibration welding method for a work piece with a plurality of oscillating heads (10) which are connected with a frequency converter and mechanically decoupled from each other, which includes the following steps:
a. defining of at least one of the frequency converters as the master and the remaining frequency converters as slaves, and
b. driving of the slaves through the at least one master such that
c. the oscillating heads are operated synchronously or in a targeted asynchronous manner in frequency, phase and amplitude or in a selection of these variables.

7. Vibration welding method in accordance with claim 6, in which the driving takes place via a parallel circuit of the frequency converter or through a connection of the frequency converter via a BUS system.

8. Vibration welding method in accordance with claim 6 or 7, in which at least two oscillating heads are operated, which can be freely positioned with respect to a work piece.

9. Vibration welding method in accordance with one of the claims 6 to 8, which has the further step:
Specification of the frequency and phasing of the oscillating heads by the master, while the frequency is determined by the mean value of the resonance frequencies of the oscillating heads (10).

10. Vibration welding method in accordance with one of the claims 6 to 9, which includes the further step:
Specification of an individual or a joint amplitude target value for the oscillating heads (10) by the master and transfer of this target value to the slaves, so that the oscillating heads (10) can be operated with matching amplitudes or with different amplitudes.

## Revendications

1. Dispositif de soudage par vibration, qui présente les caractéristiques suivantes :
a. une pluralité de têtes oscillantes (10) désaccouplées mécaniquement qui sont reliées à chaque fois à un changeur de fréquence ou à une autre excitation appropriée,
b. un montage électrique qui relie ensemble les changeurs de fréquence des têtes oscillantes (10), de sorte qu'un des changeurs de fréquence peut fonctionner comme maître et les autres changeurs de fréquence peuvent fonctionner comme esclave, de sorte que
c. en se basant sur un effet de commande du maître, un fonctionnement synchrone ou un fonctionnement asynchrone ciblé de la pluralité de têtes oscillantes (10) peut être obtenu.

2. Dispositif de soudage par vibration selon la revendication 1, dans lequel les têtes oscillantes (10) peuvent fonctionner de manière synchrone ou asynchrone ciblée en fréquence, phase et amplitude ou dans une sélection de ces grandeurs.

3. Dispositif de soudage par vibration selon la revendication 1 ou 2, dans lequel la fréquence et la relation des phases des têtes oscillantes (10) peuvent être prédéterminées par le maître, tandis que la fréquence est fixée par la valeur moyenne des fréquences de résonance des têtes oscillantes (10).

4. Dispositif de soudage par vibration selon l'une quelconque des revendications précédentes, dans lequel les esclaves peuvent être excités par le maître par le biais d'un système de bus ou d'un montage parallèle avec commande individuelle de l'amplitude.

5. Dispositif de soudage par vibration selon l'une quelconque des revendications précédentes, qui présente au moins deux têtes oscillantes (10) avec changeur de fréquence qui peuvent être positionnées librement par rapport à une pièce à usiner.

6. Procédé de soudage par vibration pour une pièce à usiner avec une pluralité de têtes oscillantes (10) reliées à chaque fois à un changeur de fréquence et désaccouplées mécaniquement les unes des autres, qui présente les étapes suivantes :
a. définition d'au moins un des changeurs de fréquence comme maître et des changeurs de fréquence restants comme esclave,
b. excitation des esclaves par l'au moins un maître, de sorte que
c. les têtes oscillantes fonctionnent de manière synchrone ou asynchrone ciblée en fréquence, phase et amplitude ou dans une sélection de ces grandeurs.

7. Procédé de soudage par vibration selon la revendication 6, dans lequel l'excitation s'effectue par le biais d'un montage parallèle des changeurs de fréquence ou par une connexion des changeurs de fréquence par le biais d'un système de bus.

8. Procédé de soudage par vibration selon la revendication 6 ou 7, dans lequel fonctionnent au moins deux têtes oscillantes qui peuvent être positionnées librement par rapport à une pièce à usiner.

9. Procédé de soudage par vibration selon l'une quelconque des revendications 6 à 8, qui présente l'étape supplémentaire :
prédétermination de la fréquence et la relation des phases des têtes oscillantes par le maître, tandis que la fréquence est fixée par la valeur moyenne des fréquences de résonance des têtes oscillantes (10).

10. Procédé de soudage par vibration selon l'une quelconque des revendications 6 à 9, qui présente l'étape supplémentaire :
prédétermination d'une valeur de consigne d'amplitude individuelle ou commune pour les têtes oscillantes (10) par le maître et transmission de cette valeur de consigne aux esclaves, de sorte que les têtes oscillantes (10) peuvent fonctionner avec une amplitude qui coïncide ou avec une amplitude différente.
